Europäisches Patentamt

European Patent Office

Office européen des brevets

(11) Numéro de publication : **0 486 397 A1**

# (12) DEMANDE DE BREVET EUROPEEN

(21) Numéro de dépôt : **91403061.4**

(22) Date de dépôt : **14.11.91**

(51) Int. Cl.⁵ : **G01L 1/16**

(30) Priorité : **16.11.90 FR 9014309**

(43) Date de publication de la demande :
**20.05.92 Bulletin 92/21**

(84) Etats contractants désignés :
**AT BE CH DE DK ES FR GB GR IT LI LU NL SE**

(71) Demandeur : **OFFICE NATIONAL D'ETUDES
ET DE RECHERCHES
AEROSPATIALES(O.N.E.R.A.)
Etablissement Public de l'Etat 29 avenue de la
Divison Leclerc
F-92320 Châtillon (FR)**

(72) Inventeur : **Janiaud, Denis
2, Avenue du Berry-Bât.E3, Rés. les
Millepertuis
F-91940 Les Ulis (FR)**
Inventeur : **Muller, Serge
8, Impasse de la Remarde
F-91290 Ollainville (FR)**

(74) Mandataire : **Cabinet Martinet & Lapoux
BP 405
F-78055 Saint Quentin en Yvelines Cédex (FR)**

(54) Transducteur de force à poutre vibrante piézoélectrique pour capteur accélérométrique.

㊼ Dans le transducteur de force (40g) est prévue une articulation entre les parties massives fixe et mobile (41g, 42g) sous la forme d'un parallélogramme déformable comprenant deux lamelles flexibles parallèles (43g, 44g) qui s'étendent perpendiculairement à la direction sensible (0Y) et de préférence, qui forment des côtés parallèles du corps monobloc du transducteur. La partie mobile (42g) est ainsi translatée suivant la direction de l'effort utile d'extension ou de compression. Une structure piézoélectrique (60g) du transducteur comporte de préférence trois poutres vibrantes (61A ; 61B ; 61C) ayant en commun deux électrodes respectivement disposées sur deux grandes faces des poutres. Afin d'éviter des courts-circuits et augmenter les performances du transducteur, chaque électrode est composée de trois branches longitudinales en "oméga majuscule" supportées par les poutres et reliées entr'elles, sur les extrémités de fixation (63F, 63M) de la structure. Un capteur accélérométrique comporte deux tels transducteurs (40g, 40d) symétriques par rapport à un axe médian perpendiculaire à la direction sensible.

FIG.12

EP 0 486 397 A1

La présente invention concerne un transducteur de force comprenant une partie massive fixe, une partie massive mobile, des moyens d'articulation reliant la partie mobile à la partie fixe, et une structure piézoélectrique. La structure possède des zones d'extrémité longitudinales fixées aux parties fixe et mobile respectivement, et s'étend longitudinalement suivant la direction sensible du transducteur et comprend au moins une poutre vibrante supportant deux électrodes.

Un tel transducteur est destiné par exemple à un capteur d'accélération à sortie différentielle. En particulier, l'invention prévoit un capteur accélérométrique miniature conçu pour être embarqué dans un missile ou un satellite pour le guidage de celui-ci, ou en tant qu'inclinomètre dans une plate-forme de forage offshore. Le capteur est bien adapté à ces utilisations car l'information qu'il délivre est directement numérisée.

Actuellement, la quasi-totalité des capteurs accélérométriques commercialisés sont de type pendulaire. Ils fonctionnent soit en mode non asservi suivant le principe d'un pendule pesant dont les déplacements sont détectés, soit en mode asservi selon lequel la position zéro du capteur est maintenu au moyen d'une force de rappel.

Le capteur accélérométrique selon l'invention relève d'un principe différent. Il met à profit la grande sensibilité de la fréquence d'une poutre vibrant en flexion, aux forces de compression ou d'extension qui sont appliquées à la poutre suivant son axe longitudinal. Les capteurs accélérométriques basés sur ce principe sont dits "à poutres ou lames vibrantes".

Le principe de fonctionnement d'un capteur accélérométrique à poutres vibrantes lui confère un potentiel de performances au moins équivalent à celui d'un capteur accélérométrique pendulaire. De plus, l'information délivrée par le capteur à poutres vibrantes est une fréquence, directement exploitable sous forme digitale, ce qui est favorable à la réduction du coût et de l'encombrement du capteur.

Au stade actuel des connaissances, les capteurs accélérométriques à poutres vibrantes sont appelés à remplacer les capteurs accélérométriques pendulaires.

L'état de la technique des capteurs accélérométriques à poutre vibrante est illustrée à la Fig. 1 pour un premier capteur connu 10 à deux transducteur de force ayant chacun une seule poutre, et aux Figs. 2 et 3 pour un second capteur connu 20 comprenant un transducteur de force à deux poutres.

**Le capteur accélérométrique** 10 comprend deux transducteurs de force 10g et 10d dont les parties massives fixes 11g et 11d sont fixées sur une embase 17 du capteur.

Les parties massives mobiles 12g et 12d des transducteurs sont respectivement reliées par des charnières d'articulation souples 13g et 13d aux ailes horizontales des parties fixes en forme de dièdre. Les charnières 13g et 13d sont perpendiculaires à la direction sensible OY du capteur qui est parallèle à la direction longitudinale des uniques poutres des structures piézoélectriques 5g et 5d incluses dans les transducteurs.

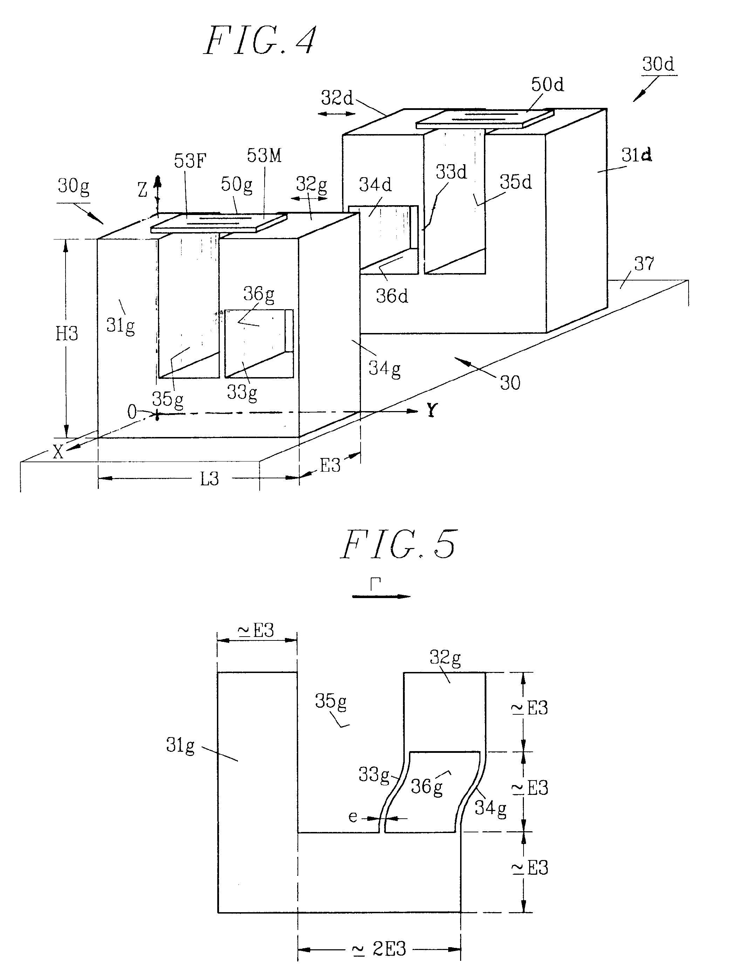

Une forme particulière des structures 5g et 5d est décrite dans le brevet US-A-3 470 400 et illustré à la Fig.4(a) de l'article de E.P EERNISSE et al., IEEE TRANSACTIONS ON ULTRASONICS, FERROELECTRICS, AND FREQUENCY CONTROL, vol. 35, N° 3, mai 1988, pages 323-330, New York, US, intitulé "Survey of Quartz Bulk Resonator Sensor Technologies". Elle a pour but de réduire les fuites d'énergie vibratoire vers le corps métallique du capteur 10, grâce à un effet d'inertie de masselottes isolantes en forme de U au centre de la structure. Pour que cette isolation vibratoire soit efficace, il est nécessaire que les structures 5g et 5d soient réalisées en respectant des tolérances d'usinage serrées, ce qui est difficile compte tenu de leur géométrie complexe.

Lorsque le capteur 10 est en fonctionnement, les poutres des structures 5g et 5d sont entretenues à leurs vibrations de résonance propre en flexion, chacune indépendamment, au moyen de circuits électroniques oscillateurs d'entretien OSg et OSd. Le couplage entre vibration mécanique et oscillation électrique est obtenu par effet piézoélectrique au moyen de paires d'électrodes déposées sur les deux faces opposées de la poutre vibrante de la structure dans chaque transducteur.

Sachant que les parties mobiles 12g et 12d sont situées respectivement à droite et à gauche des parties fixes mobiles 11g et 11d le long de la direction sensible OY, l'une des structures à poutre vibrante, par exemple la structure 5g pour une accélération dirigée vers la droite, est soumise, par l'intermédiaire de la partie mobile correspondante, à une force axiale d'extension, et l'autre structure 5d à une force axiale de compression. Il s'ensuit que les fréquences de vibration des poutres sont modifiées : la fréquence Fg de la première structure 5g augmente, et la fréquence Fd de la seconde structure 5d diminue. Les variations de fréquence sont, en première approximation, proportionnelles à l'intensité $\Gamma$ de l'accélération appliquée :

$$Fg \approx F_O + k\Gamma$$
$$Fd \approx F_O - k\Gamma$$

où $F_O$ est la fréquence de résonance des poutres vibrantes des structures en l'absence d'accélération, et k est un coefficient dépendant des caractéristiques dimensionnelles et du matériau des poutres.

Le signal de sortie du capteur est la fréquence différentielle Fg-Fd, obtenue par exemple au moyen d'un mélangeur et mesurée par un fréquencemètre FM :

$$Fg-Fd = 2 k\Gamma$$

Un intérêt d'effectuer la soustraction des deux fréquences est de réduire l'influence des grandeurs d'entrée parasites qui agissent de la même façon sur les deux structures à poutre vibrante, la température en particulier.

Un premier inconvénient du capteur connu 10 consiste en des difficultés de réalisation des corps des transducteurs 10g et 10d et particulièrement des charnières 13g et 13d, ce qui augmente le coût du capteur.

En effet, les charnières doivent présenter des raideurs très faibles suivant l'axe sensible OY, et très importantes suivant les deux axes transverses OX et OZ. Leur comportement doit être le plus élastique possible, car tout comportement plastique se traduit directement par une hystérésis de la réponse du capteur. Ces caractéristiques sont difficiles à obtenir, du fait que la raideur d'une charnière est concentrée dans la petite zone voisine de son axe. Il en résulte une dépendance très forte entre la qualité mécanique de ces moyens d'articulation entre partie fixe et partie mobile et le bon comportement du capteur.

La technologie de réalisation des charnières est donc délicate et complexe. Elle nécessite de multiples opérations, telles que traitements mécaniques, thermiques et chimiques, qui grèvent le coût de fabrication.

Un deuxième inconvénient du capteur 10 réside dans le principe même de fonctionnement des charnières qui n'autorisent qu'un déplacement en rotation des parties massives mobiles 12g et 12d autour d'axes perpendiculaires à la direction sensible. Les poutres vibrantes sont ainsi soumises à des couples parasites de flexion, en addition aux efforts utiles d'extension et de compression, qui affectent la linéarité de la réponse du capteur à l'accélération.

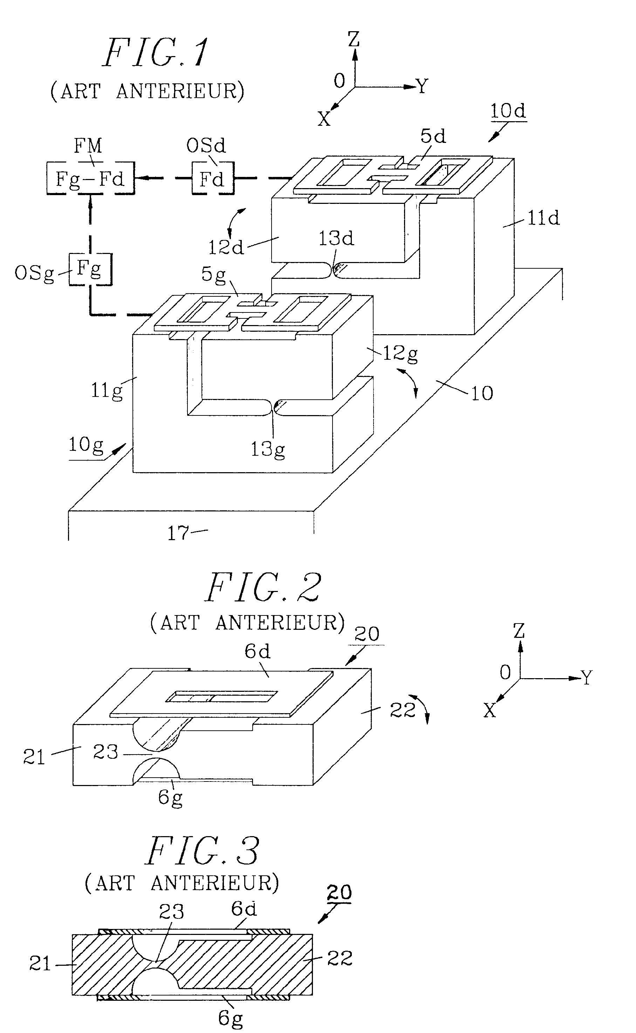

**Le second capteur connu** 20 montré aux Figs. 2 et 3 comprend un unique corps de transducteur, c'est-à-dire une unique partie massive fixe 21 et une unique partie massive mobile 22 qui sont deux pavés dans le prolongement l'un de l'autre suivant une direction longitudinale OY perpendiculaire à la direction sensible OZ du capteur. Les parties 21 et 22 sont reliées par une charnière souple 23 dont l'axe de rotation est perpendiculaire à la direction sensible OZ. La charnière 23 est franchie de part et d'autre par deux structures à deux poutres vibrantes 6g et 6d, et donc de type double diapason. De telles structures sont décrites dans le brevet US-A-4 372 173 et également dans le brevet US-A-4 751 849 (Fig.1). Les poutres dans chaque structure vibrent suivant la direction OX et en opposition de phase.

Lorsqu'une accélération est appliquée suivant la direction sensible OZ, le petit déplacement en rotation de la partie mobile 22 provoque une force axiale d'extension sur l'une des structures vibrantes 6g et 6d, et une force axiale de compression sur l'autre.

L'influence de ces forces sur les fréquences Fg et Fd des poutres vibrantes est de même nature que dans le capteur 10. Il s'ensuit que la fréquence différentielle Fg-Fd est, en première approximation, proportionnelle à l'intensité $\Gamma$ de l'accélération :

$$Fg\text{-}Fd\ =\ 2\,k\Gamma$$

Les inconvénients du second capteur 20 sont analogues à ceux du premier capteur 10 :
- difficulté de réalisation de la charnière 23 ;
- effets parasites de la rotation de la partie mobile 22 ;
- difficulté de réalisation des structures vibrantes piézoélectriques 6g et 6d.

De même que pour les structures 5g et 5d dans le capteur précédent 10, la forme particulière des structures 6g et 6d a pour but de confiner l'énergie de vibration dans les poutres vibrantes.

Le bon fonctionnement d'un double diapason nécessite une précision d'usinage très importante, notamment au niveau de l'identité dimensionnelle des deux poutres qui le composent.

**Un troisième capteur connu** est décrit dans le brevet déjà cité US-A-4 751 849, en référence à la Fig.4. Le troisième capteur comprend, comme le second capteur connu 20, un transducteur de force ayant une structure à deux poutres vibrantes 6d ou 6g.

Toutefois, afin de rémédier aux inconvénients de la charnière 13g, 13d, 23 dans les capteurs connus 10 et 20, celle-ci est remplacée par deux lamelles flexibles parallèles, dites également "bras", qui s'étendent perpendiculairement à la direction sensible et qui ont chacune des extrémités liées aux parties fixes et mobile. Les deux lamelles constituent ainsi un parallélograme déformable de manière à soumettre la partie mobile du transducteur à un déplacement traduisant véritablement, notamment en direction, l'effort utile d'extension ou de compression.

S'agissant de la disposition des électrodes d'excitation électrique sur chacune des poutres des transducteurs dans les capteurs connus précités, ou des électrodes sur chacune des trois poutres d'autres structures piézoélectriques de transducteur de force, comme par exemple décrites dans le brevet US-A-4 594 898, ou des électrodes sur chacune des deux poutres latérales de la structure piézoélectrique qui est décrite dans la demande de brevet EP-A-0 373 040 et qui comprend une poutre centrale supportant une résistance de mesure de température, au moins l'une des grandes faces de la poutre comprend deux bandes linéaires appartenant respectivment aux deux électrodes. Ces bandes d'électrode s'étendant longitudinalement et axialement sur moins des moitiés de longueur de la poutre à partir des zones d'extrémité de fixation de la structure aux parties fixe et mobile.

Par exemple, les dispositions relatives d'électrodes selon le brevet US-A-4 594 898 (Fig.4A), présentent l'inconvénient suivant : sur l'une des grandes faces de chaque poutre sont disposées une électrode d'excitation et une électrode de captation ayant des polarités opposées, et l'autre grande face principale de la poutre est recouverte d'une électrode commune de masse.

Il est rappelé que la géométrie de ces deux électrodes est obtenue par gravure, au moyen d'un procédé photolithographique. Ce procédé implique le dépôt d'une couche métallique sur toute la surface de la structure piézoélectrique. Cette couche métallique est avantageusement celle qui constitue le masque de protection du quartz piézoélectrique lors de l'usinage chimique de la structure.

Pour graver des électrodes de polarités opposées sur une même face d'une poutre de la structure, il est donc indispensable que la qaulité de cette gravure soit suffisamment bonne pour éliminer les risques de court-circuit entre les électrodes. Cette exigence constitue une difficulté technologique importante, lorsqu'il s'agit de réalisation miniaturisées et en grande série.

Les dispositions d'électrodes connues ne sont donc pas cohérentes avec la facilité d'usinage de la structure piézoélectrique.

La présente invention a pour principal objectif d'éviter les inconvénients de l'agencement des deux électrodes sur une poutre vibrante dans les transducteurs de force connus. En particulier, l'invention vise à fournir une répartition d'électrodes qui non seulement réduit le coût de fabrication du transducteur, mais également évite des courts-circuits entre électrodes et augmente les performances du transducteur.

A cette fin, un transducteur de force tel que défini dans l'entrée en matière, est caractérisé en ce que les deux électrodes sont respectivement disposées sur deux grandes faces de ladite poutre, et chacune des électrodes comporte une branche longitudinale sensiblement en forme de "oméga majuscule" ayant une bande centrale longeant l'un des chants longitudinaux de la poutre et deux bandes d'extrémité sensiblement égales longeant l'autre chant longitudinal de la poutre.

Les électrodes de polarités opposées ne sont plus sur la même face de la poutre vibrante, mais sont sur des faces opposées. Les électrodes sont donc séparées par l'épaisseur de la poutre, ce qui évite tout court-circuit entr'elles.

Le cheminement en "oméga majuscule" de l'électrode sur la poutre accroît l'efficacité du transducteur, grâce à une répartition du champ électrique dans la poutre créant précisément la répartition de la contrainte d'expansion-compression dans la poutre afin que celle-ci vibre à sa fréquence de résonance.

D'autres caractéristiques des électrodes relatives à une poutre sont énoncées dans les revendications 2 à 7.

En particulier, la structure comprend de préférence deux poutres externes et une poutre centrale qui vibrent en opposition de phase grâce aux fomes des branches d'électrode en "oméga majuscule" renversées l'une par rapport à l'autre sur les poutres externes et la poutre centrale.

Les moyens d'articulation dans un transducteur de force selon l'invention sont sous la forme d'un parallélogramme déformable comprenant deux lamelles flexibles parallèles s'étendant perpendiculairement à la direction sensible et liées aux parties fixe et mobile.

L'un des côtés du parallélogramme est une portion de la partie fixe. Lorsque l'accélération à mesurer est perpendiculaire aux lamelles, la partie massive mobile dans le transducteur selon l'invention est translatée suivant la direction sensible, et ne subit pas de rotation.

Selon une réalisation préférée du transducteur, les lamelles froment des côtés parallèles du corps du transducteur, ce qui facilite leur usinage. Les parties fixe et mobile sont des dièdres disposés tête-bêche de part et d'autre d'un axe transversal du transducteur perpendiculaire à la direction sensible, lesdites lamelles reliant les bases de premières ailes des dièdres parallèles à la direction sensible du transducteur, et la structure piézoélectrique ayant des zones d'extrémité qui sont fixées latéralement à des secondes ailes de dièdres perpendiculaires à la direction sensible.

L'invention concerne également un capteur accélérométrique comportant deux transducteurs de force selon l'invention qui sont symétriques l'un de l'autre par rapport à un axe médian des corps des transducteurs perpendiculaire à la direction sensible et dont les parties fixes sont fixées sur une embase.

Les parties massives fixes et mobiles et les lamelles des transducteurs forment un corps monobloc usiné qui comporte une base qui est commune auxdites parties fixes.

D'autre avantages et caractéristiques de l'invention apparaîtront plus clairement à la lecture de la description suivante de plusieurs réalisations préférées de l'invention en référence aux dessins annexés correspondants dans lesquels :

– la Fig. 1 est une vue schématique en perspective d'un premier capteur accélérométrique selon la technique antérieure et déjà commenté ;

– les Figs. 2 et 3 sont des vues schématiques en perspective et en coupe longitudinale d'un second capteur accélérométrique selon la technique antérieure et déjà commenté ;

– la Fig. 4 est une vue en perspective schématique de deux transducteurs de force dans un capteur accélérométrique selon une première réalisation de l'invention ;

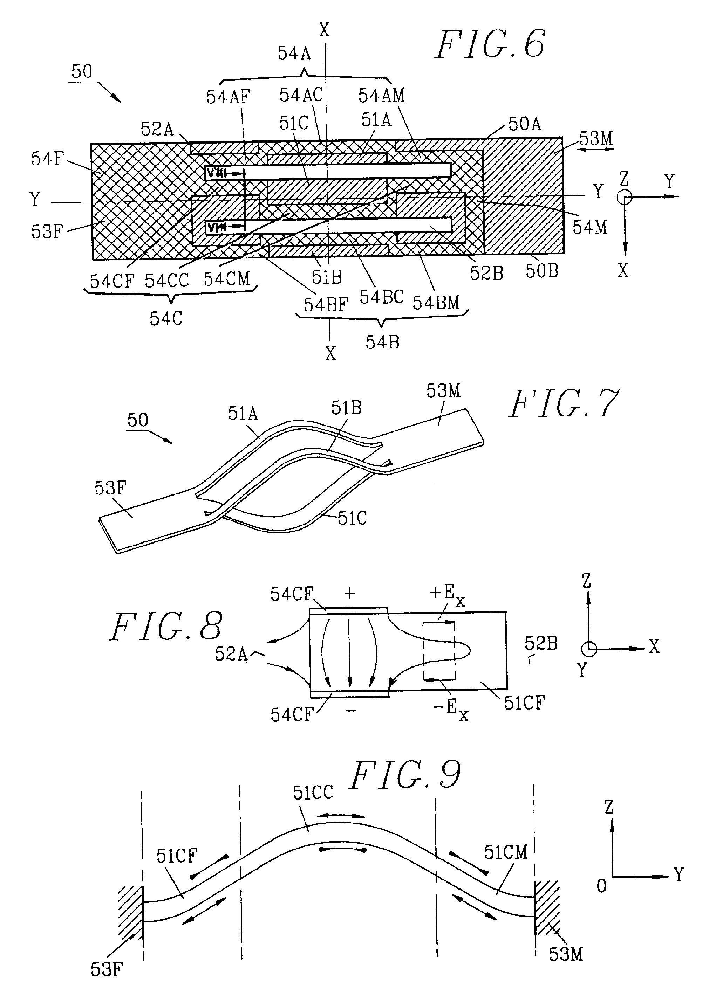

– la Fig. 5 est une vue de face verticale d'un premier transducteur du capteur de la Fig. 4, soumis à une extension "exagérée" ;

– la Fig. 6 est une vue de dessus schématique d'une structure à une poutre centrale vibrante et deux poutres externes vibrantes pour transducteur selon l'invention ;

– la Fig. 7 est une vue en perspective schématique de la structure de la Fig. 6 lorsque la poutre centrale vibre en opposition de phase aux deux poutres externes ;

– la Fig. 8 est un diagramme de champ électrique dans une section transversale de poutre prise le long de la ligne VIII-VIII de la Fig. 6 ;

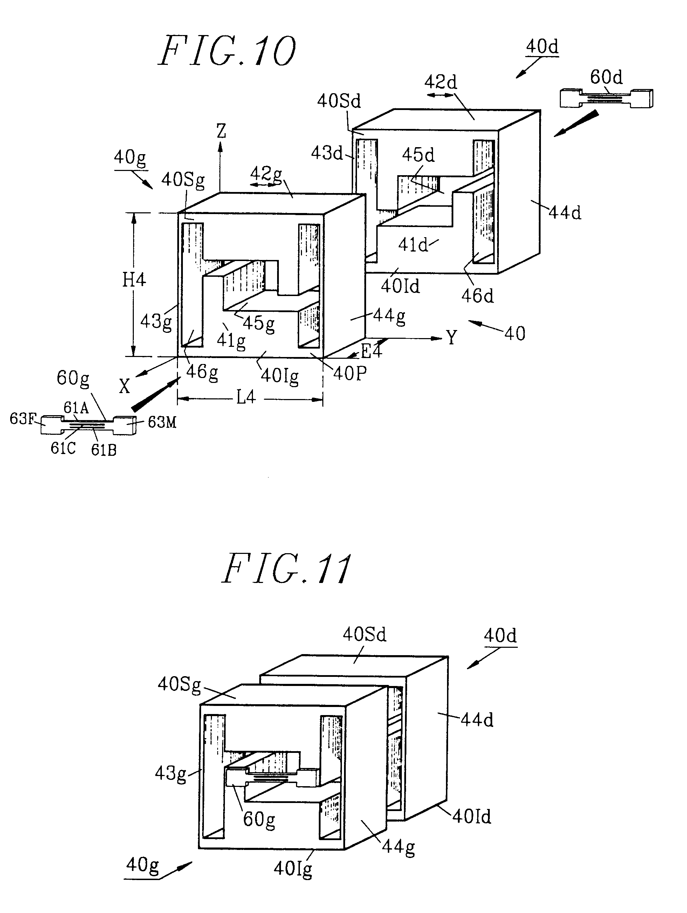

– la Fig. 9 est une vue longitudinale schématique d'une poutre soumise à une flexion exagérée ;

– la Fig.10 est une vue en perspective éclatée de deux tranducteur de force dans un capteur accélérométrique selon une seconde réalisation de l'invention ;

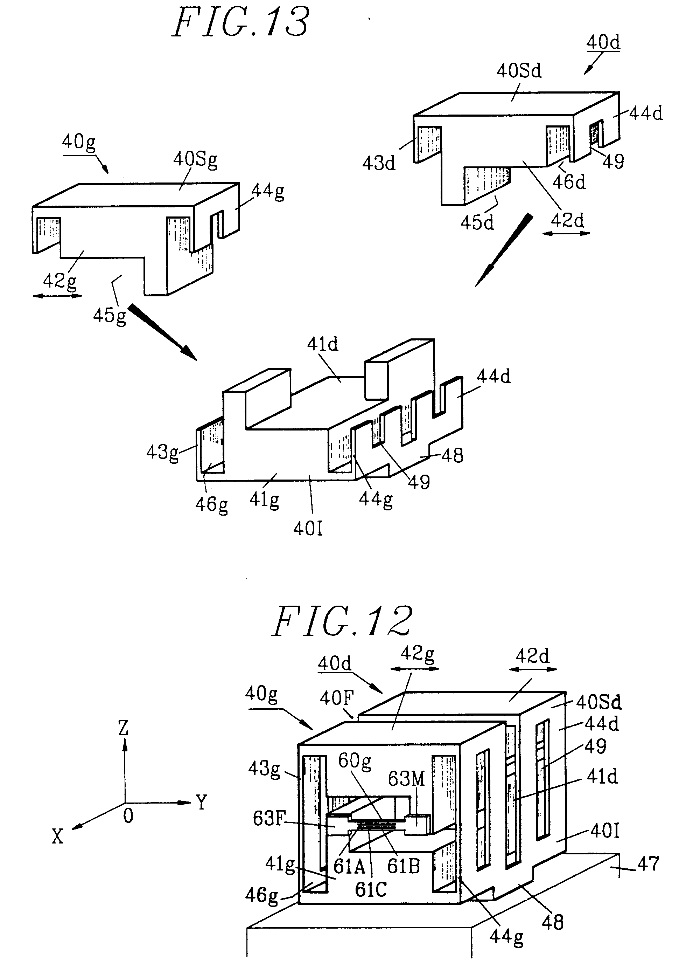

– la Fig. 11 est une vue en perspective des deux transducteurs de la Fig. 10 ;

– la Fig. 12 est une vue en perspective du capteur de la Fig. 11 dont les deux transducteurs ont été usinés dans un même corps ;

– la Fig. 13 est une vue en perspective "éclatée" pour expliquer la forme du corps monobloc du capteur de la Fig. 12 ; et

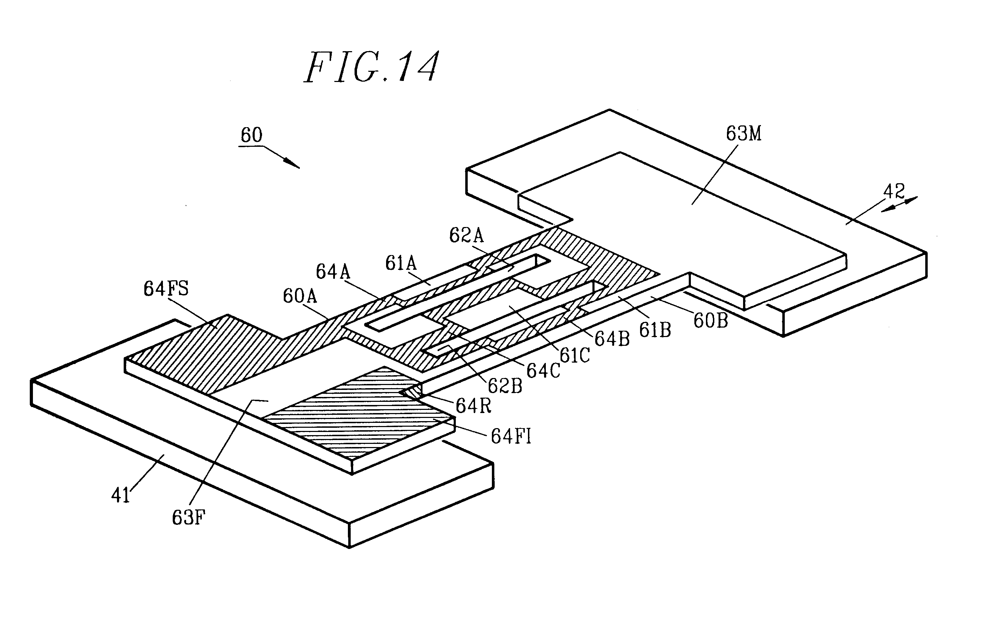

– la Fig. 14 est une vue en perpective détaillée d'une structure à trois poutres vibrantes pour un transducteur du capteur selon la seconde réalisation.

En référence à la Fig. 4, un **transducteur de force** 30g selon l'invention comprend essentiellement une partie massive fixe 31g, une partie massive mobile 32g, deux lamelles d'articulation parallèles 33g et 34g, et une structure piézoélectrique à poutre vibrante 50g.

Les parties 31g et 32g et les lamelles 33g et 34g constituent le corps monobloc du transducteur 30g qui est obtenu par exemple par électroérosion d'un parallélépipède en alliage métallique. Ce parallélépipède présente des épaisseur E3, longueur L3 et hauteur H3 définies par rapport aux axes OX, OY et OZ d'un repère cartésien dont le sommet O est au coin inférieur arrière de la partie fixe 31g du transducteur 30g. La direction sensible du transducteur est parallèle à l'axe OY.

Selon cette première réalisation, la partie massive fixe 31g est un dièdre ayant des ailes horizontale et verticale parallèles aux plans XOY et ZOX respectivement, de manière à délimiter une encoignure ayant une section sensiblement carrée 2(E3) x 2(E3) dans le plan YOZ. Dans cette encoignure est prévue la partie massive 32g sensiblement cubique de côté E3 environ. La partie 32g est disposée à l'opposé de l'arête OX du dièdre de partie fixe.

Les lamelles 33g et 34g s'étendent verticalement et parallèlement au plan ZOX et ont des premières extrémités liées à la surface supérieure de l'aile horizontale de la partie fixe 31g, et des secondes extrémités liées à la face inférieure de la partie mobile 32g.

La première lamelle 33g prolonge la face transversale de la partie 32g, parallèlement à l'aile verticale de la partie fixe 31g, de manière à former un évidement en forme de fente verticale 35g occupant sensiblement la moitié de l'encoignure de la partie fixe 31g. Le sommet de la fente 35g est franchi par la structure à poutres vibrantes 50g. La lamelle 33g est ainsi sensiblement située à mi-longueur de l'aile horizontale de la partie fixe 31g.

La seconde lamelle 34g s'étend entre la face externe de la partie mobile 32g opposée à l'aile verticale de la partie fixe, et la petite face extrême de l'aile horizontale de la partie fixe, afin de former avec ces deux faces une face externe verticale plane du corps du transducteur 30g parallèle au plan ZOX.

Ainsi les deux lamelles 33g et 34g ont chacune une surface sensiblement égale à E3 x E3 et une épaisseur e très faible par rapport à E3. Un second évidement transversal sensiblement cubique 36g est ainsi délimité par les lamelles 33g et 34g, une portion de l'aile horizontale de la partie fixe 31g et la face inférieure de la partie mobile 32g qui constituent ensemble un parallèlogramme déformable dont le côté supérieur est translatable.

Lorsque le transducteur de force 30g est soumis à une accélération $\Gamma$ suivant la direction sensible OY perpendiculaire aux lamelles d'articulation 33g et 34g, ces lamelles subissent une déformation sensiblement en S, qui a été volontairement exagérée dans la Fig.5. Le parallèlogramme déformable initialement rectangulaire se transforme en parallèlogramme à côtés horizontaux et côtés inclinés. Le déplacement de la partie massive mobile 32g est quasiment une translation pure, parallèle à l'axe sensible OY, comme montré à la Fig. 5.

Cette assimilation du déplacement à une translation pure est d'autant plus rigoureuse que le déplacement de la partie mobile 32g est petit vis à vis de la longueur des lamelles, ce qui est le cas lorsque la structure à poutres vibrantes 50g relie la partie mobile 32g à la partie fixe 31g. Le déplacement en translation de la partie massive mobile, vers la droite dans la Fig. 5 ou vers la gauche, ne fait subir aux poutres vibrantes de la structure 50g que les seuls efforts utiles d'extension selon la Fig.5 ou de compression, contrairement au déplacement en rotation imposé par la charnière 13d, 13g, 23 selon la technique antérieure. Il en découle une meilleure linéarité de la réponse du transducteur 30g à l'accélération $\Gamma$.

Un second avantage des lamelles 33g et 34g par rapport à la charnière réside dans la facilité de leur réalisation. En effet, du fait que la raideur des lamelles est répartie sur toute leur longueur, leur qualité d'élasticité est naturellement préservée, même en utilisant des techniques de fabrication à faible coût, telles que l'électroérosion à fil.

Un **capteur accélérométrique** 30 selon une première réalisation de l'invention comprend le transducteur de force 30g et un second transducteur de force 30d, comme montré à la Fig.4.

Le second transducteur 30d comprend une partie massive fixe 31d, une partie massive mobile 32d, deux lamelles d'articulation parallèles 33d et 34d, et une structure piézoélectrique à poutres vibrantes 50d qui sont respectivement équivalentes aux éléments 31g à 34g et 50g composant le premier transducteur 30g. Les deux transducteurs 30g et 30d sont conçus et disposés l'un par rapport l'autre afin que les poutres vibrantes dans les structures 50g et 50d soient parallèles à la direction sensible OY d'une accélération à mesurer et soient soumises l'une à une force longitudinale d'extension et l'autre à une force longitudinale de compression, par l'intermédiaire des parties massives mobiles 32g et 32d. Les parties mobiles se déplacent parallèlement à la direction sensible OY, l'une en s'éloignant de la partie fixe respective, l'autre en se rapprochant de l'autre partie fixe respective.

L'influence des forces d'extension et de compression auxquelles sont soumises les structures vibrantes 50g et 50d, sur les fréquences Fg et Fd générées par les structures est de même nature que selon la technique antérieure (Fig. 1). Il s'ensuit que la fréquence différentielle Fg-Fd est quasiment proportionnelle à l'intensité Γ de l'accélération.

Ainsi, comme montré à la Fig. 4, le second transducteur 30d comporte un corps parallélépipédique 31d-32d qui a une configuration déduite de celle du corps 31g-32g par symétrie par rapport au plan transversal vertical médian Y=L3/2 de ce corps qui traverse le premier évidement 35g et qui est parallèle au plan ZOX perpendiculaire à la direction sensible OY.

Les ailes horizontales des parties fixes 31g et 31d sont fixées coplanairement sur une embase 37 du boîtier du capteur 30 et s'étendent suivant des sens opposés le long de la direction sensible OY. Les dièdres des parties fixes 31g et 31d sont parallèles au plan YOZ, mais ont des encoignures en opposition. Dans ces conditions, l'aile verticale de la partie fixe 31g de l'un, 30g, des transducteurs est disposée à gauche de la partie mobile 32g et des lamelles 33g et 34g de ce transducteur 30g, tandis que l'aile verticale de la partie fixe 31d de l'autre transducteur 30d est disposée à droite de la partie mobile 32d et des lamelles 33d et 34d dudit autre transducteur 30d. Il en résulte que pour un sens d'accélération donné, par exemple vers la droite dans la Fig. 4, la partie mobile 32g s'éloigne de l'aile verticale de la partie fixe 31g et la structure 50g subit une extension, tandis que la partie mobile 32d se rapproche de l'aile verticale de la partie fixe 31d et la structure 50d subit une compression.

Il est décrit maintenant une **structure à trois poutres vibrantes** 50, désignée précédemment 50g ou 50d, selon une réalisation préférée de l'invention, bien que d'autres structures à une ou deux poutres vibrantes selon l'invention puissent être fixées entre les parties fixe et mobile d'un corps de transducteur.

La structure 50 montrée à la Fig. 6 est une structure à trois poutres. Elle est usinée à partir d'une plaque en matériau piézoélectrique ayant une épaisseur faible, par exemple de quelques centièmes de millimètre. Le matériau piézoélectrique est de préférence du quartz.

La structure 50 est rectangulaire et comporte trois poutres vibrantes coplanaires 51C, 51A et 51B. La poutre centrale 51C s'étend symétriquement le long de l'axe longitudinal YY de la structure, parallèle à la direction sensible de transducteur OY. Les poutres latérales externes 51A et 51B s'étendent longitudinalement de part et d'autre de la poutre centrale 51C et sont séparées de celle-ci par deux fentes longitudinales identiques parallèles 52A et 52B, les longueurs des trois poutres étant égales. La largeur de chacune des deux poutres externes 51A et 51B est la moitié de celle de la poutre interne centrale 51C, de sorte que la masse de chaque poutre externe est la moitié de la masse de la poutre interne centrale 51C. Chaque poutre est destinée à fléchir et vibrer dans la direction de son épaisseur, c'est-à-dire normalement à son plan.

Au moyen d'un circuit oscillateur d'entretien relié à deux électrodes communes aux trois poutres, les deux poutres externes 51A et 51B vibrent en opposition de phase avec la poutre centrale 51C, comme montré d'une manière très accentuée à la Fig. 7. Comme la masse de la poutre centrale 51C est le double de celle de chacune des poutres externes 51A et 51B, l'énergie vibratoire transférée par la poutre centrale aux zones d'extrémité longitudinale de fixation 53F et 53M de la structure 50 est égale à l'énergie fournie par les deux poutres externes aux zones 53F et 53M. Il en résulte que l'énergie vibratoire est totalement confinée dans les poutres et que les zones 53F et 53M reliant les poutres entre elles ne sont pas sollicitées par les déplacements vibratoires.

S'agissant de l'usinage, la structure à trois poutres vibrantes 50 présente des tolérances dimensionnelles beaucoup plus larges que les structures connues à une ou deux poutres 5d, 6d présentées aux Figs. 1 et 2. Dans le cas d'une structure diapason 6d à deux poutres vibrantes, la vibration s'effectue dans le plan de la structure. L'épaisseur effective des poutres suivant la direction de la vibration est donc obtenue par usinage de découpe, notamment pour obtenir la fente centrale de la structure. Par contre, comme déjà dit, dans une structure vibrante à trois poutres 50, la vibration est dirigée perpendiculairement au plan de la structure. L'épaisseur effective des poutres n'est pas obtenue par usinage de découpe, mais par un polissage optique de la plaque initiale piézoélectrique qui précède la découpe. Une très bonne identité d'épaisseur des trois poutres est ainsi spontanément obtenue ce qui procure un excellent confinement de l'énergie vibratoire.

La facilité d'usinage de la structure à trois poutres 50 est ainsi favorable à sa miniaturisation. Cette structure est donc particulièrement bien adaptée à la réalisation de capteurs accélérométriques de faible coût et d'encombrement réduit.

En petites dimensions, le mode de réalisation préférentiel de la structure à trois poutres en quartz est l'usinage chimique, mis en oeuvre à partir de procédés photolithographiques. A titre indicatif, les longueur, largeur et épaisseur hors-tout d'une structure 50 sont 4,5 mm, 1 mm et 0,05 mm.

La structure vibrante 50 comprend deux **électrodes** métalliques respectivement déposées sur les grandes faces de la structure. Ces deux électrodes sont identiques et sont superposées. L'une d'entre elles est montrée sous la forme de hachures croisées dans la Fig. 6, le matériau piézoélectrique nu sur la grande face de structure correspondante étant délimité par des hachures linéaires.

L'électrode est composée d'une région de contact d'extrémité 54F sensiblement rectangulaire recouvrant presque la totalité de l'une 53F des zones de fixation de la structure, et de trois branches conductrices 54A, 54B et 54C disposées respectivement sur les trois poutres 51A, 51B et 51C. La région de contact 54F est ainsi située sur la partie fixe du transducteur et est destinée au soudage de l'extrémité de l'un de deux fils conducteurs (non représentés) reliés aux bornes du circuit oscillateur d'entretien.

Chacune des branches conductrices 54A, 54B et 54C est symétrique par rapport à l'axe transversal XX de la structure. Chaque branche comporte deux courtes bandes longitudinales respectives 54AF et 54AM, 54BF et 54BM, 54CF et 54CM au voisinage des extrémités des fentes 52A et 52B, et une longue bande longitudinale centrale respective 54AC, 54BC, 54CC s'étendant de part et d'autre de l'axe transversal XX. Les deux courtes bandes d'extrémité et la longue bande centrale dans chaque branche sont reliées par des doubles coudes à angle droit conducteur.

Les trois premières courtes bandes 54AF, 54BF et 54CF sont issues de la région de contact 54F, et les trois secondes courtes bandes 54AM, 54BM et 54CM sont reliées par une bande de connexion conductrice transversale 54M disposée sur la zone de fixation 53M liée à la partie mobile du transducteur. Il apparaît ainsi que les trois branches de l'électrode sont reliées entre elles à leurs extrémités ; la liaison entre branches est donc redondante. Une rupture de branche d'électrode sur l'une ou même deux des trois poutres de la structure n'affecte en rien l'efficacité du transducteur, puisque la liaison de la région de contact 54F avec toutes les bandes de la ou des branches rompues est assurée par la troisième branche.

Les dimensions et la disposition des trois bandes dans chacune des branches d'électrode par rapport aux poutres de la structure sont choisies d'une part afin que les courbures concave et convexe de chacune des faces de chaque poutre s'équilibrent sensiblement suivant la longueur de la poutre de part et d'autre de deux sections transversales d'inflexion de la poutre, d'autre part afin que la poutre centrale 51C vibre en opposition de phase aux poutres externes 51A et 51B, comme on le verra dans la suite en référence aux Figs. 8 et 9.

La largeur des bandes est sensiblement égale à la demi-largeur des poutres externes 51A et 51B. La longueur des bandes centrales 54AC, 54BC et 54CC est sensiblement égale à la demi-longueur des fentes de structure 52A et 52B et est sensiblement égale au double de la longueur des courtes bandes d'extrémité 54AF, 54AM, 54BF, 54BM, 54CF et 54CM.

Les branches 54A et 54B sur les poutres externes sont identiques et superposables et offrent un cheminement longitudinal sensiblement en "oméga majuscule $\Omega$", tandis que le cheminement longitudinal de la branche conductrice centrale 54C suit sensiblement un "oméga majuscule renversé", de manière à imposer des vibrations en opposition de phase entre poutres externes et poutre centrale. Ainsi, les bandes d'extrémités 54AF, 54AM et 54BF, 54BM des branches externes bordent respectivement l'une 52A des fentes et le chant longitudinal 50B de la structure éloignée de cette fente 52A, tandis que les bandes d'extrémité 54CF et 54CM de la branche centrale bordent l'autre côté longitudinal de ladite fente 52A. Réciproquement, les bandes centrales 54AC et 54BC des branches externes bordent respectivement l'autre chant longitudinal 50A de la structure et l'autre fente 52B éloignée de ce chant 50A, tandit que la bande centrale 54CC de la branche centrale borde l'autre côté dongitudinal de ladite autre fente 52B.

Le processus d'excitation piézoélectrique de l'une des poutres telle que la poutre centrale 51C, est décrit ci-après en référence aux Fig. 8 et 9. A titre d'exemple, il est supposé dans la Fig. 8 que la coupe transversale de poutre dans le plan ZOX est effectuée au niveau de la paire de bandes d'extrémité 54CF, bien que l'homme du métier pourra en déduire aisément des répartitions de champ électrique analogues dans des sections de la poutre centrale ou des poutres externes. Les directions OX, OY et Oz correspondent aux axes cristallographiques du matériau piézoélectrique, dans le cas du quartz, l'un de ces axes étant ainsi parallèle à la direction sensible.

Les bandes 54CF sur les grandes faces de la poutre 51C sont de polarités opposées. Ces bandes sont séparées par l'épaisseur de la poutre, ce qui évite tout court-circuit entre les pôles électriques, comparativement à deux électrodes de polarités opposées sur la même grande face de structure dans les transducteurs connus.

Les deux bandes 54CF longent le même chant de la poutre 54C, ici dans la fente 52A, et ont une largeur nettement inférieure à celle de la poutre. Le processus d'excitation montré à la Fig. 8 met à profit la composante transversale de champ électrique $E_x$ créée par les effets de bord des bandes d'électrodes 54CF. Les lignes de champ électrique transversal sont de plus en plus parallèles aux grandes faces de la poutre et de sens contraire au voisinage de ces grandes faces lorsque l'on s'éloigne des électrodes, vers le chant de la poutre opposé à celles-ci, bordant la fente 52B.

La composante $E_x$ crée une contrainte mécanique d'extension ou de compression $T_{YY} = -e_{11} E_x$ qui change de signe en fonction du sens de la composante $E_x$, $e_{11}$ étant un coefficient du tenseur piézoélectrique du quartz. Dans les tronçons d'extrémité 51CF et 51CM de la poutre montrée à la Fig. 9, les fibres inférieures et supérieures du tronçon de la poutre sont soumises respectivement à une contrainte d'extension $T_{YY} > 0$ et à une contrainte de compression $T_{YY} < 0$ suivant l'axe OY. Les contraintes sont inversées dans le tronçon central 51CC. Lorsque les polarités des électrodes sont inversées alternativement, chaque tronçon de poutre oscille alors de part et d'autre de la position horizontale.

Comme montré à la Fig. 9, pour provoquer convenablement la flexion d'une poutre encastrée à ses deux extrémités 53F et 53M, il est nécessaire d'engendrer des contraintes mécaniques correspondant à l'alternance des courbures le long de la poutre. Par exemple, à partir de la zone de fixation 53F, la face supérieure de la poutre 51C est concave sur un tronçon court 51CF supportant les bandes 54CF, puis convexe sur un tronçon long central 51CC supportant les bandes 54CC et à nouveau concave sur un tronçon court 51CM supportant les bandes 54CM. La sollicitation de ces tronçons en surfaces concave et convexe résulte du cheminement longitudinal en oméga des branches des électrodes 54C sur la poutre.

Une seconde réalisation de capteur accélérométrique 40 est montrée aux Figs. 10 et 11. Il comprend deux transducteurs de force parallélépipédiques 40g et 40d disposés l'un par rapport à l'autre et ayant des fonctions comme des transducteurs 30g et 30d. Le transducteur 40g est seulement décrit ci-après puisque le transducteur 40d est déduit du transducteur 40g par une rotation de 180° autour d'un axe vertical central, comme pour les transducteurs 30g et 30d, ou autour d'un autre axe de symétrie qui est transversal, horizontal et central.

Le transducteur 40g offre une partie massive fixe 41g et une partie massive mobile 42g qui sont découpées en forme de dièdres droits, de préférence identiques, disposés tête-bêche, c'est-à-dire symétriquement par rapport à l'axe transversal médian parallèle à la direction horizontale OX. Les deux dièdres des parties fixe et mobile sont ainsi séparés par une fente transversale rectangulaire 45g qui est traversée par une structure à poutre vibrante 60g s'étendant latéralement au transducteur 40g suivant la direction sensible OY. Les zones de fixation 63F et 63M de la structure 60g sont fixées, par exemple par collage, sur les côtés externes des deux petites ailes verticales des dièdres 41g et 42g afin que la structure 60g soit disposée verticalement contre une grande face du transducteur, et les trois poutres 61A, 61B et 61C de cette structure soient parallèles à la direction sensible OY.

Des bases 40Ig et 40Sg des grandes ailes des parties 41g et 42g constituent les côtés horizontaux du transducteur 40g et ont leurs extrémités qui sont reliées par deux lamelles d'articulation rectangulaires 43g et 44g.

Ces lamelles 43g et 44g constituent des côtés verticaux du transducteur et sont parallèles aux petites ailes des parties 41g et 42g par l'intermédiaire de fentes horizontales étroites 46g. Les deux lamelles 43g et 44g sont ainsi disposées à l'extérieur du corps du transducteur 40g et sont donc plus faciles à usiner que la lamelle 33g dans le transducteur 30g.

En outre, les longueur L4, épaisseur E4 et hauteur H4 du transducteur 40g peuvent être plus petites que celles du transducteur 30g, pour une même structure vibrante. La disposition de la structure 60g au centre d'une face verticale du transducteur 40g augmente la compacité du transducteur, tout en permettant une plus grande tolérance dans les caractéristiques des lamelles d'articulation 43g et 44d. La hauteur des lamelles et donc des fentes 46g peut être modifiée dans des proportions importantes, sans changer les dimensions hors-tout du transducteur.

Une réalisation préférée du capteur accélérométrique 40 est illustrée aux Fig. 12 et 13. La Fig. 13 montre le corps du capteur 40 en éclaté de trois pièces bien que ce corps soit monolithique. En effet, bien que les parties fixes 41g et 41d des transducteurs 40g et 40d peuvent être fixées sur une embase commune, telle que l'embase 37 (Fig.4), les deux corps des transducteurs 40g et 40d sont usinés dans un même bloc de matériau, tel qu'un alliage métallique. Les bases inférieures 40Ig et 40Id sous-jacentes aux ailes longues et horizontales de dièdre des parties fixes 41g et 41d forment une base inférieure horizontale d'assise 40I commune aux deux transducteurs qui sont espacés par une fente centrale vertical 40F. A l'opposé de cette fente, la base 40I surmonte un pédoncule 48 en forme de languette horizontale parallèle à la direction sensible OY. Le pédoncule 48 est solidaire d'une embase 47 du boîtier étanche du capteur. Le pédoncule 48 assure ainsi un découplage mécanique du capteur 40 par rapport aux contraintes auxquelles est soumis le boîtier du capteur.

A titre d'exemple, le transducteur 40 s'inscrit sensiblement dans un cube de côté 6 mm environ et est donc très compact.

Dans cette réalisation, chacune des quatre lamelles 43g, 44g, 43d et 44d est divisée en deux par une fente verticale 49 pour éliminer certains modes de vibration parasites des lamelles susceptibles d'affecter le bon fonctionnement du capteur.

La Fig. 14 montre la structure à trois poutres pour chacun des transducteurs 40g et 40d selon la réalisation préférée de la Fig. 12. Comparativement à la Fig. 6, les zones de fixation 63F et 63M forment des paires d'ailes d'un "I" dont l'âme comporte trois poutres vibrantes 61A, 61B et 61C respectivement avec des paires de branches conductrices 64A, 64B et 64C, et sont fixées sur les parties fixe et mobile 41 et 42 du transducteur.

La région de contact 64FS de l'électrode supérieure de la structure, entièrement visible aux Figs. 6 et 14, occupe l'une des ailes du "I" de la zone d'extrémité de structure 63F fixée à la petite aile de la partie massive fixe 41 du transducteur. L'autre aile de la zone de fixation 63F est recouverte par une région de contact 64FI qui est reliée à l'électrode inférieure de la structure par un ruban de rappel de métallisation 64R contournant une extrémité du chant longitudinal 60B de la structure, sans être en contact avec le corps du transducteur.

La disposition des deux régions de contact 64FS et 64FI sur une même face de la structure 60 n'offre pas l'inconvénient d'électrode dans la structure décrite dans le US-A-4 594 898. En effet, la zone de fixation 63F est suffisamment large pour prévoir un intervalle de séparation suffisamment grand entre les régions 64FS et 64FI, tout en offrant des surfaces de ces régions suffisamment étendues pour y souder des extrémités de fils conducteurs reliés au circuit oscillateur d'entretien.

## Revendications

1. Transducteur de force comprenant une partie massive fixe (31g), une partie massive mobile (32g), des moyens d'articulation (33g, 34g) reliant la partie mobile à la partie fixe, et une structure piézoélectrique (50g) qui possède des zones d'extrémité longitudinale (53F, 53M) fixées aux parties fixe et mobile respectivement, qui s'étend longitudinalement suivant la direction sensible (OY) du transducteur et qui comprend au moins une poutre vibrante (51A; 51B; 51C) supportant deux électrodes (54A; 54B; 54C), caractérisé en ce que les deux électrodes (54A ; 54B ; 54C) sont respectivement disposées sur deux grandes faces de ladite poutre (51A ; 51B ; 51C), et chacune des électrodes comporte une branche longitudinale (54A ; 54B ; 54C) sensiblement en forme de "oméga majuscule" ayant une bande centrale (54AC ; 54BC ; 54CC) longeant l'un (50A ; 52B ; 52B) des chants longitudinaux de la poutre et deux bandes d'extrémité sensiblement égales (54AF, 54AM ; 54BF, 54BM ; 54CF, 54CM) longeant l'autre chant longitudinal (52A ; 52A ; 50B) de la poutre (51A ; 51B ; 51C).

2 - Transducteur conforme à la revendication 1, caractérisé en ce que la longueur des bandes d'extrémité (54AF, 54AM ; 54BF, 54BM ; 54CF, 54CM) et la demi-longueur de la bande centrale (54AC ; 54BC ; 54CC) sont sensiblement égales au quart de la longueur de la poutre vibrante (51A ; 51B ; 51C).

3 - Transducteur conforme à la revendication 1 ou 2, caractérisé en ce que la largeur de la branche d'électrode (54A ; 54B ; 54C) est au plus sensiblement égale à la demi-largeur de la poutre (51A, 51B, 51C).

4 - Transducteur conforme à l'une quelconque des revendications 1 à 3, caractérisé en ce que les électrodes comportent deux régions de contact (64FS, 64FI) reliées aux branches respectivement et disposées sur l'une (63F) des zones d'extrémité de la structure (60) d'une même grande face de la structure.

5 - Transducteur conforme à la revendication 4, caractérisé en ce que ladite zone d'extrémité (63F) sur laquelle les deux régions de contact (64FS, 64FI) sont disposées, est fixée à la partie massive fixe (41).

6 - Transducteur conforme à l'une quelconque des revendications 1 à 5, caractérisé en ce que la structure piézoélectrique (50) comporte deux poutres vibrante externes (51A, 51B) et une poutre vibrante centrale (51C), les grandes faces de chacune des trois poutres supportant deux branches d'électrode (54A, 54B, 54C) en forme de "oméga majuscule" respectivement, et la forme en "oméga majuscule" des branches (54C) sur la poutre centrale (51C) étant renversée par rapport à la forme en "oméga majuscule" des branches (54A, 54B) sur les poutres externes.

7 - Transducteur conforme à la revendication 4 ou 5 et à la revendication 6, caractérisé en ce que chacune des électrodes comporte une bande de connexion (54M) qui est disposée sur l'autre zone d'extrémité (53M) de la structure (50) et qui relie trois bandes d'extrémité (54AM, 54BM, 54CM) des branches (54A, 54B, 54C) sur les poutres (51A, 51B, 51C).

8 - Transducteur conforme à l'une quelconque des revendications 1 à 7, caractérisé en ce que la structure piézoélectrique (50) est en quartz ayant un axe cristallographique (OY) parallèle à la direction sensible (OY).

9 - Transducteur conforme à l'une quelconque des revendications 1 à 8, caractérisé en ce que les moyens d'articulation sont sous la forme d'un parallélogramme déformable comprenant deux lamelles flexibles parallèles (33g, 34g) s'étendant perpendiculairement à la direction sensible (OY) et liées aux parties fixe et mobile (31g, 32g).

10 - Transducteur conforme à la revendication 9, caractérisé en ce que la partie fixe (31g) est un dièdre ayant une première aile parallèle à la direction sensible (OY) et à laquelle sont liées des premières extrémités des lamelles (33g, 34g), et une seconde aile perpendiculaire à la direction sensible (OY) et ayant un chant auquel est fixée l'une (53F) des zones d'extrémité de la structure piézoélectrique (50g), la partie mobile (32g) étant disposée dans l'encoignure délimitée par le dièdre.

11 - Transducteur conforme à la revendication 9, caractérisé en ce que les lamelles (43g, 44d) forment des côtés parallèles du corps du transducteur.

12 - Transducteur conforme à la revendication 9 ou 11, caractérisé en ce que les parties fixe et mobile (41g, 42g) sont des dièdres disposés tête-bêche de part et d'autre d'un axe transversal du transducteur perpendiculaire à la direction sensible (OY), lesdites lamelles (43g, 44g) reliant les bases (40Ig, 40Sg) de premières ailes des dièdres parallèles à la direction sensible (OY) du transducteur (40g), et ladite structure piézoélectrique (60g) ayant des zones d'extrémité (63F, 63M) qui sont fixées latéralement à des secondes ailes de dièdres perpendiculaires à la direction sensible (OY).

13 - Transducteur conforme à l'une quelconque des revendications 9, 11 ou 12, caractérisé en ce qu'il est sensiblement symétrique par rapport à un axe transversal perpendiculaire à la direction sensible (OY).

14 - Transducteur conforme à l'une quelconque des revendications 9 à 13, caractérisé en ce que les parties massives fixe et mobile (31g, 32g ; 41g, 42d) et les lamelles (33g, 34g ; 43g, 44g) forment un corps monobloc usiné.

15 - Transducteur conforme à l'une quelconque des revendications 9 à 14, caractérisé en ce que chacune des lamelles (43g, 44g) comporte une fente longitudinale (49) perpendiculaire à la direction sensible (OY).

16 - Capteur accélérométrique (30 ; 40) comportant deux transducteurs de force (30g, 30d ; 40g, 40d) conformes à l'une quelconque des revendications 1 à 15 qui sont symétriques l'un de l'autre par rapport à un axe médian des corps des transducteurs perpendiculaire à la direction sensible (0Y) et dont les parties fixes (31g, 31d ; 41g, 41d) sont fixées sur une embase (37;47).

17 - Capteur conforme à la revendication 16, caractérisé en ce que les parties massives fixes et mobiles (41g, 41d ; 42g, 42d) et les lamelles (43g, 43d ; 44g, 44d) des transducteurs forment un corps monobloc usiné qui comporte une base (40I) qui est commune auxdites parties fixes (41g, 41d).

18. Capteur conforme à la revendication 17, caractérisé en ce que ladite base commune (40I) comporte un pédoncule (48) qui s'étend sur une face de la base opposée à une fente (40F) entre les deux transducteurs (40g, 40d), de préférence parallèle à la direction sensible (OY), pour découpler mécaniquement les transducteurs de l'embase (47).

*FIG.1*
(ART ANTERIEUR)

*FIG.2*
(ART ANTERIEUR)

*FIG.3*
(ART ANTERIEUR)

11

## FIG. 4

## FIG. 5

FIG.6

FIG.7

FIG.8

FIG.9

# FIG.10

# FIG.11

# $FIG.13$

# $FIG.12$

*FIG.14*

EP 0 486 397 A1

EP 0 486 397 A1

Office européen
des brevets

**RAPPORT DE RECHERCHE EUROPEENNE**

Numero de la demande

EP 91 40 3061

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | US-A-3 470 400 (L. WEISBORD) --- | 1 | G 01 L 1/16 |
| A,D | IEEE TRANSACTIONS ON ULTRASONICS, FERROELECTRICS AND FREQUENCY CONTROL vol. 35, no. 3, May 1988, pages 323-330, New York, US; E.P. EERNISSE et al.: "Survey of Quartz Bulk Resonator Sensor Technologies" * pages 327,328 * --- | 1,4,8 | |
| A,D | US-A-4 372 173 (E.P. EERNISSE et al.) --- | | |
| A,D | US-A-4 751 849 (J.M. PAROS et al.) * figures 3-5; résumé; colonne 4, ligne 27 - colonne 5, ligne 9 * --- | 1,16,17 | |
| A,D | US-A-4 594 898 (R.G. KIRMAN et al.) * résumé; figure 1; revendication 2 * --- | 1,6,8 | |
| A,D | EP-A-0 373 040 (SOCIETE D'APPLICATIONS GENERALES D'ELECTRICITE) * figure 1; résumé * --- | 1,4,16, 17 | **DOMAINES TECHNIQUES RECHERCHES (Int. Cl.5)** |
| A | GB-A-2 142 430 (SHINKO DENSHI COMP. LTD) * résumé; figure 1 * ----- | 1 | G 01 L 1/16 G 01 L 9/00 G 01 P 15/08 |

Le présent rapport a été établi pour toutes les revendications

| Lieu de la recherche | Date d'achèvement de la recherche | Examinateur |
|---|---|---|
| BERLIN | 13-02-1992 | KOEHN G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................
& : membre de la même famille, document correspondant

EPO FORM 1503 03.82 (P0402)

17